Europäisches Patentamt

European Patent Office

Office européen des brevets

(11) Numéro de publication: **0 280 824 B1**

# (12) FASCICULE DE BREVET EUROPEEN

(45) Date de publication de fascicule du brevet:
**18.09.91**

(51) Int. Cl.⁵: **F16F 9/50, B60G 17/08**

(21) Numéro de dépôt: **87402691.7**

(22) Date de dépôt: **27.11.87**

(54) **Amortisseur pour véhicule à suspensions pneumatiques, notamment pour poids lourd.**

(30) Priorité: **02.03.87 FR 8702784**

(43) Date de publication de la demande:
**07.09.88 Bulletin 88/36**

(45) Mention de la délivrance du brevet:
**18.09.91 Bulletin 91/38**

(84) Etats contractants désignés:
**AT BE CH DE ES FR GB GR IT LI LU NL SE**

(56) Documents cités:
**DE-A- 1 430 051      DE-B- 1 111 040**
**FR-A- 1 298 412      FR-A- 1 300 013**
**FR-A- 2 154 882      GB-A- 874 003**
**GB-A- 1 185 074      GB-A- 1 450 765**
**GB-A- 2 151 746      GB-A- 2 170 572**
**NL-A- 6 501 510**

(73) Titulaire: **JIMECAL**
**Z.I. de Saint Médard des Prés**
**F-85200 Fontenay le Comte(FR)**

Titulaire: **Jeanson, René Henri**
**Rue de la Cour AUZAY**
**F-85200 Fontenay le Comte(FR)**

(72) Inventeur: **Jeanson, René Henri**
**Rue de la Cour Auzay**
**F-85200 Fontenay le Comte(FR)**

(74) Mandataire: **Chameroy, Claude**
**c/o Cabinet Malemont 42, avenue du Prési-**
**dent Wilson**
**F-75116 Paris(FR)**

Rank Xerox (UK) Business Services

## Description

La présente invention concerne un amortisseur pour véhicule à suspensions pneumatiques, notamment pour poids lourd, du type comprenant un cylindre, une tige déplaçable axiaiement dans le cylindre, un pistan porté par la tige et divisant le cylindre en une chambre cylindrique et une chambre annulaire, un fluide sous pression remplissant les chambres cylindrique et annulaire, un premier circuit pour permettre au fluide de circuler de la chambre annulalle à la chambre cylindrique lorsque l'amortisseur travaille en traction, un second circuit pour permettre au fluide de circuler de la chambre cylindrique à la chambre annlaire lorsque l'amortisseur travaille en compresslon, un réservoir de flulde sous pression susceptible d'être relié aux chambres cylindrique et annulaire, et des premier et second régulateurs d'écoulement montés dans les premier et second circuits pour y contrôler la circulaticn du fluide sous pression, ces régulateurs d'écoulement étant commandés par le fluide sous pression, à l'encontre de l'action de la pression de l'air comprimé de la suspension pneumatique correspondante du véhicule.

Les poids lourds tels que les camions, les remorques et les semi-remorques sont appelés à supporter des charges pouvant varier dans de très grandes proportions selon qu'ils sont utilisés à vide ou à charge maximale.

La plupart d'entre eux sont équipés de suspensions pneumatiques assurant convenablement leur fonction quelle que soit la charge transportée, la pression de l'air comprime dans les soufflets ou les diaphragmes de ces suspensions étant proportionnelle à ladite charge.

En revanche, les amortisseurs de ces différents poids lourds ont des caractéristiques d'amortissement constantes et ne peuvent freiner correctement les oscillations des suspensions que pour une charge déterminée.

FR-A-1 298 412 décrit un amortisseur du type précité dont la courbe d'amortissement dépend de la charge supportée par la suspension associée et qui fonctionne avec efficacité quelle que soit la valeur de cette charge.

La présente invention se propose de perfectionner cet amortisseur particulier et pour ce faire, l'amortisseur qu'elle concerne se caractérise en ce que les premier et second régulateurs d'écoulement comprennent respectivement un premier et un second tiroirs coaxiaux déplaçables en translation et l'un par rapport à l'autre dans des première et seconde douilles coaxiales, entre une première position dans laquelle ils interdisent pratiquement toute circulation de fluide dans les premier et second circuits lorsque l'amortisseur est au repos, une seconde position dans laquelle ils permettent une circulation de fluide dans le premier circuit lorsque l'amortisseur travaille en traction et une troisième position dans laquelle ils permettent une circulation de fluide dans le second circuit lorsque l'amortisseur travaille en compression, les tiroirs étant sollicités dans la première position par la pression de l'air comprimé tandis que la pression exercée sur le fluide sous pression pendant la traction et la compression de l'amortisseur agit à l'encontre de la pression de l'air comprimé pour déplacer les tiroirs (24,26) dans les seconde et troisième positions, respectivement; en ce que le second tiroir comporte deux prolongements opposés faisant saillie coaxialement sur ses deux faces, l'un des prolongements étant tourné vers une face du premier tiroir et ménageant avec ledit premier tiroir, lorsqu'il est en contact avec lui, une première chambre annulaire tandis que l'autre prolongement est tourné vers une butée d'arrêt située à l'extrémité de la seconde douille qui est opposée à la première douille et ménage avec la butée d'arrêt, lorsqu'il est en contact avec elle, une seconde chambre annulaire, la pression de l'air comprimé agissant sur l'autre face du premier tiroir pour solliciter les premier et second tiroirs vers la première position lorsque les prolongements du second tiroir sont respectivement en contact avec la butée d'arrêt et le premier tiroir; et en ce que le premier circuit communique avec la première chambre annulaire ménagée entre les tiroirs de sorte que la pression exercée sur le fluide sous pression lorsque l'amortisseur travaille en traction maintient l'autre prolongement du second tiroir contre la butée d'arrêt et tend à éloigner le premier tiroir du second tiroir à l'encontre de l'action de la pression de l'air comprimé afin d'amener lesdits tiroirs dans la seconde posiiton, tandis que le second circuit communique avec la seconde chambre annulaire ménagée entre le second tiroir et la butée d'arrêt de sorte que la pression exercé sur le fluide sous pression lorsque l'amortisseur travaille en compression tend à éloigner les deux tiroirs de la butée d'arrêt à l'encontre de l'action de la pression de l'air comprimé afin d'amener lesdits tiroirs dans la troisième position.

Pour que l'écoulement du fluide sous pression dans les deux circuits soit pratiquement insensible aux variations de viscosité dudit fluide (ces variations dépendant largement de la température ambiante), les orifices d'étranglement des premier et second circuits sont avantageusement des orifices en paroi mince. Le fonctionnement de l'amortisseur ne risque donc pas d'être perturbé pendant les périodes de grand froid.

Pour tenir compte du fait que la force de freinage de l'amortisseur est beaucoup plus importante en traction qu'en compression, les sections du tiroir et de l'orifice d'étranglement du second circuit sont respectivement supérieures aux sections du tiroir et de l'orifice d'étranglement du premier circuit.

Par ailleurs, pour amortir les oscillations très lentes de la suspension, il est souhaitable que l'orifice d'étranglement du second circuit ne soit pas complètement obturé lorsque l'amortisseur est au repos.

Selon un premier mode de réalisation de l'invention, le premier tiroir est sollicité en direction du second tiroir par une tringlerie sur laquelle s'exerce la pression de l'air comprimé de la suspension pneumatique correspondante du véhicule.

Plus précisément, la tringlerie comprend un piston solidaire d'une tige déplaçable axialement dans un cylindre, une bielle articulée à l'extrémité libre de la tige, et un levier articulé sur la bielle, ce levier étant monté pivotant autour d'un axe fixe et portant une came s'appuyant contre le premier tiroir, la pression de l'air comprimé exerçant son action sur la face du piston qui est tournée vers la tige.

Selon un second mode de réalisation de l'invention, le premier tiroir est sollicité en direction du second tiroir par une membrane contre laquelle s'exerce la pression de l'air comprimé de la suspension pneumatique correspondante du véhicule. Plus précisément, il s'avance dans un orifice ménagé au centre d'une paroi contre laquelle s'appuie la membrane et est apte à faire saillie hors de cet orifice pour éloigner la membrane de la paroi lorsque l'amortisseur travaille en traction ou en compression.

Avantageusement, la membrane est fixée par sa périphérie entre la paroi et un capot délimitant avec elle une chambre dans laquelle s'exerce la pression de l'air comprimé de la suspension pneumatique.

Grâce à cette disposition, l'amortisseur peut être réalisé avec une structure simple et peu encombrante.

Pour que l'amortisseur ait une courbe d'amortissement satisfaisante, il est préférable que la paroi soit concave, par exemple en forme de calotte sphérique et comporte une gorge à proximité de la périphérie de la membrane. Il est par ailleurs souhaitable que la membrane soit armée pour ne pas s'allonger sous la pression de l'air comprimé de la suspension pneumatique et/ou sous l'action du piston du premier circuit.

Deux modes d'exécution de la présente invention seront décrits ci-après à titre d'exemple nullement limitatif en référence aux dessins annexés dans lesquels :

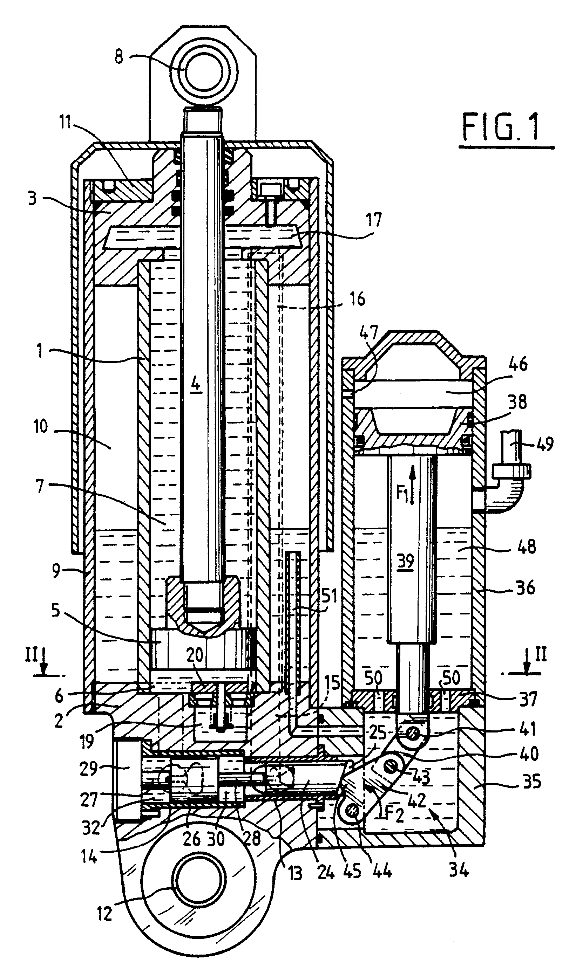

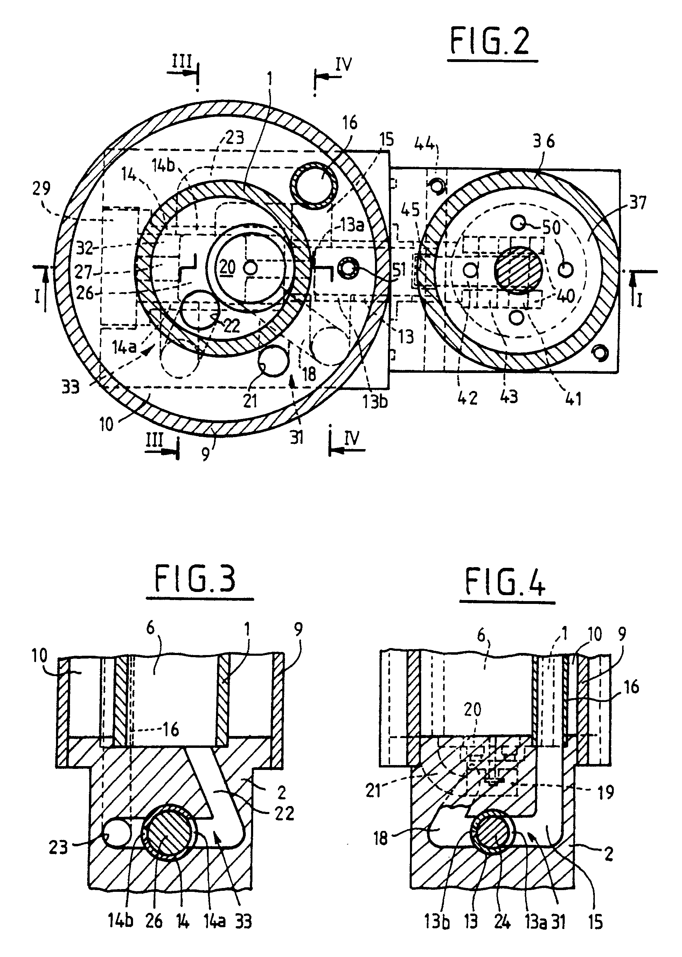

. la figure 1 est une vue en coupe verticale d'un amortisseur conforme à l'invention, cette coupe étant réalisée selon la ligne I-I de la figure 2 et montrant le piston de la tringlerie en position haute ;

. la figure 2 est une vue en coupe selon la ligne II-II de la figure 1 ;

. la figure 3 est une vue en coupe selon la ligne III-III de la figure 2 ;

. la figure 4 est une vue en coupe selon la ligne IV-IV de la figure 2 ;

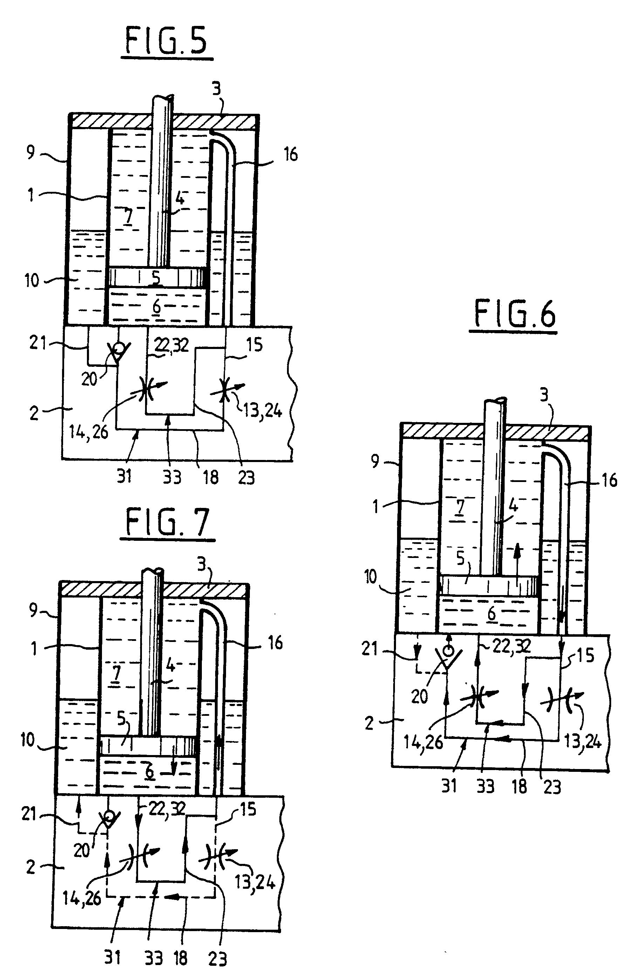

. la figure 5 est un schéma montrant les deux circuits de fluide sous pression lorsque l'amortisseur est au repos ;

. la figure 6 est un schéma montrant les deux circuits lorsque l'amortisseur travaille en traction ;

. la figure 7 est un schéma montrant les deux circuits lorsque l'amortisseur travaille en compression ; et

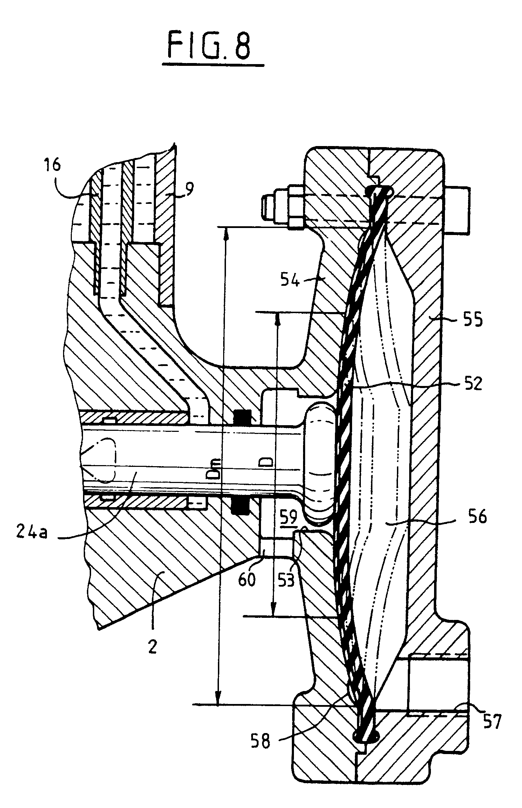

. la figure 8 est une vue en coupe verticale partielle d'un amortisseur selon un second mode de réalisation.

L'amortisseur que l'on peut voir sur la figure 1 est destiné à équiper des poids lourds comportant des suspensions pneumatiques. Il comprend un cylindre 1 dont l'extrémité inférieure est solidaire d'un bloc 2 et dont l'extrémité supérieure est fermée par un palier 3, une tige 4 déplaçable axialement dans le cylindre 1, et un piston 5 prévu à l'extrémité inférieure de la tige 4, ce piston divisant le cylindre en une chambre cylindrique 6 et une chambre annulaire 7.

La tige 4 traverse le palier 3 dans lequel elle peut coulisser de manière étanche et porte à son extrémité libre un dispositif d'articulation 8 destiné à relier l'amortisseur au châssis (non représenté) d'un poids lourd.

Un cylindre 9 s'étendant coaxialement avec le cylindre 1 forme avec ce dernier un réservoir 10 contenant un fluide sous pression, de préférence de l'huile, destiné à remplir les chambres cylindrique 6 et annulaire 7.

Comme le montre la figure 1, l'extrémité inférieure du cylindre 9 est solidaire du bloc 2 tandis que son extrémité supérieure s'appui contre la paroi latérale du palier 3 et reçoit un écrou de fermeture 11.

Le bloc 2 porte à son extrémité inférieure un dispositif d'articulation 12 destiné à être relié au bras de suspension (non représenté) de la suspension pneumatique correspondante du poids lourd. Il est pourvu d'un alésage étagé renfermant une douille 13 dans sa partie de plus petite section et une douille 14 dans son autre partie.

La douille 13 comporte un orifice d'alimentation 13a situé dans le prolongement d'un conduit 15 ménagé dans le bloc 2 et raccordé à un tube vertical 16 s'étendant dans le réservoir 10, ce tube débouchant dans une cavité annulaire 17 réalisée dans le palier 3 et communiquant avec la chambre annulaire 7. Elle comporte également un orifice d'étranglement 13b situé dans le prolongement d'un conduit 18 ménagé dans le bloc 2 et aboutissant à une cavité 19 relié à la chambre cylindrique 6 par l'intermédiaire d'un clapet de non-retour 20 monté de manière à permettre un écoulement de fluide uniquement dans le sens allant vers la chambre cylindrique 6, la cavité 19 étant en outre reliée au réservoir 10 par un conduit 21.

Quant à la douille 14, elle comporte un orifice d'alimentation 14a situé dans le prolongement d'un conduit 22 ménagé dans le bloc 2 et aboutissant dans la chambre cylindrique 6. Elle comporte également un orifice d'étranglement 14b situé dans le prolongement d'un conduit 23 ménagé dans le bloc 2 et raccordé au tube vertical 16.

En se référant plus particulièrement à la figure 1, on remarquera par ailleurs que la douille 13 renferme un tiroir cylindrique 24 portant, à son extrémité la plus éloignée de la douille 14, une rainure 25 ayant un fond incliné, alors que la douille 14 renferme un tiroir cylindrique 26 comportant deux prolongements opposés 27, 28 s'étendant coaxialement avec le tiroir 24.

On remarquera également qu'un bouchon fileté 29 retient la douille 14 dans l'alésage étagé du bloc 2 et sert de butée au prolongement 27 du tiroir 26 qui sert lui-même de butée au tiroir 24 par l'intermédiaire de son prolongement 28. Plus précisément, lorsque les tiroirs 24, 26 s'appuient contre leur butée respective, comme représenté sur la figure 1, le premier laisse l'orifice d'alimentation 13a ouvert et obture complètement l'orifice d'étranglement 13b alors que le second laisse l'orifice d'alimentation 14a ouvert mais n'obture pas complètement l'orifice d'étranglement 14b.

Pour faciliter la compréhension du fonctionnement de l'amortisseur qui sera décrit ci-après en référence aux figures 5 à 7, on précisera maintenant que :

. le tube 16, le conduit 15, la chambre 30 ménagée entre les tiroirs 24 et 26, le conduit 18 et la cavité 19 constituent un premier circuit 31 destiné à permettre au fluide sous pression de circuler de la chambre annulaire 7 à la chambre cylindrique 6 lorsque l'amortisseur travaille en traction ; et

. le conduit 22, la chambre 32 ménagée entre le tiroir 26 et le bouchon 29, le conduit 23 et le tube 16 constituent quant à eux un second circuit 33 destiné à permettre au fluide sous pression de circuler de la chambre cylindrique 6 à la chambre annulaire 7 lorsque l'amortisseur travaille en compression.

Conformément à l'invention, les tiroirs 24, 26 sont déplaçables en translation dans les douilles 13, 14 par le fluide sous pression qui est apte à agir à l'encontre de l'action de la pression de l'air de la suspension pneumatique correspondante du poids lourd.

Dans l'exemple représenté sur la figure 1, l'amortisseur comporte une tringlerie 34 logée en partie dans un carter 35 fixé sur le bloc 2 et en partie dans un cylindre 36 séparé du carter 35 par un palier 37. Cette tringlerie comporte un piston 38 solidaire d'une tige 39 déplaçable axialement dans le cylindre 36, une bielle 40 articulée sur un axe 41 prévu à l'extrémité libre de la tige 39 qui traverse le palier 37 pour pénétrer dans le carter 35, et un levier 42 articulé par un axe 43 sur la bielle 40, ce levier étant monté pivotant autour d'un axe 44 solidaire du carter 35 et portant une came 45 s'appuyant contre le fond incliné de la rainure 25 du tiroir 24.

Dans l'exemple de réalisation représenté, la came 45 a la forme d'une dent d'engrenage en développante de cercle afin de rouler sans frotter sur le fond de la rainure 25 du tiroir 24. Il va de soit cependant qu'elle pourrait être remplacée par un galet.

Le piston 38 sépare le cylindre 36 en une chambre cylindrique 46 reliée à l'atmosphère par un orifice 47 et en une chambre annulaire 48 reliée au soufflet ou au diaphragme (non représenté) de la suspension pneumatique du poids lourd par l'intermédiaire d'un conduit 49.

Par ailleurs, le palier 37 comporte des canaux 50 faisant communiquer la chambre annulaire 48 du cylindre 36 avec l'intérieur du carter 35 qui est lui-même relié au réservoir 10 par l'intermédiaire d'un conduit 51.

La pression de l'air comprimé contenu dans le soufflet ou le diaphragme d'une suspension pneumatique est proportionnelle à la charge s'exerçant sur cette dernière. L'air comprimé qui est présent dans la chambre annulaire 48 du cylindre 36 exerce donc sur le piston 38 une force dirigée dans le sens de la flèche $F_1$ proportionnelle à la charge s'exerçant sur la suspension associée à l'amortisseur. Simultanément, la tige de piston 39 exerce une traction sur la bielle 40 qui, en sollicitant le levier 42 à pivoter sur l'axe 44 dans le sens de la flèche $F_2$, maintient la came 45 en appui contre le fond de la rainure 25 du tiroir 24.

La force d'appui de la came 45 contre le tiroir 24 dépend de la pression de l'air comprimé dans la suspension pneumatique et du bras du levier formé par la ligne passant par le centre des axes 41, 43 avec le centre de l'axe 44. Il ressort clairement de la figure 1 que ce bras de levier est minimum lorsque les tiroirs 24, 26 s'appuient contre leur butée respective 28, 29 et augmente d'abord très rapidement puis plus lentement lorsque le tiroir 24 se déplace à l'encontre de la force que la came 45 exerce sur lui.

On va maintenant décrire le fonctionnement de l'amortisseur conforme à l'invention en se référant plus particulièrement aux figures 5 à 7.

### 1) Cas où l'amortisseur est au repos (figure 5)

Lorsque l'amortisseur est au repos, les tiroirs 24 et 26 s'appuient contre leur butée respective, comme représenté sur la figure 1. Le tiroir 24 obture complètement l'orifice d'étranglement 13b et interdit toute circulation de fluide entre les conduits 15 et 18. De son côté, le tiroir 26 n'obture pas complètement l'orifice d'étranglement 14b et peut autoriser une faible circulation de fluide dans les conduits 22 et 23 pour que les courbes représentant les forces d'amortissement en fonction de la vitesse de déplacement du piston 5 passent par le point zéro.

On notera ici que le tiroir 26 pourrait, à la demande, obturer complètement l'orifice d'étranglement 14b. Dans ce cas, les courbes précitées auraient leur origine au-dessus du point zéro, le décalage correspondant en hauteur étant fonction de la valeur du bras de levier mentionné ci-dessus.

### 2) Cas où l'amortisseur travaille en traction (figure 6)

L'amortisseur est dans ce cas soumis à une action extérieure tendant à l'allonger. Le volume de la chambre annulaire 7 a donc tendance à diminuer tandis que la pression du fluide dans la chambre 30 du premier circuit 31 a tendance à augmenter.

Lorsque cette pression est suffisante pour surmonter la force d'appui de la came 45 sur le tiroir 24, celui-ci s'éloigne du prolongement 28 du tiroir 26 et autorise le fluide contenu dans la chambre 7 à circuler dans le conduit 18 du premier circuit 31. La pression du fluide dans ce dernier étant supérieur à celle du fluide dans la chambre cylindrique 6, le clapet 20 s'ouvre et permet au fluide contenu dans la chambre 7 de se diriger dans la chambre cylindrique 6.

Etant donné que la section de la chambre 7 est inférieure à celle de la chambre 6, celle-ci peut toutefois se remplir complètement grâce à un apport complémentaire de fluide fourni par le réservoir 10, la circulation de cet apport étant symbolisée par la ligne en pointillés sur la figure 6.

Pendant ce temps, le tiroir 26 demeure en appui contre le bouchon 29 et n'autorise donc qu'une très faible circulation de fluide de la chambre annulaire 7 à la chambre cylindrique 6 par le second circuit 33.

### 3) Cas où l'amortisseur travaille en compression (figure 7)

L'amortisseur est dans ce cas soumis à une action extérieure tendant à le raccourcir. Le volume de la chambre cylindrique 6 a donc tendance à diminuer alors que la pression du fluide dans la chambre 32 du second circuit 33 a tendance à augmenter.

Lorsque cette pression est suffisante pour surmonter la force d'appui de la came 45 sur le tiroir 24, le tiroir 26 s'éloigne du bouchon 29 en entraînant avec lui le tiroir 24. Le fluide contenu dans la chambre 6 peut alors circuler dans le second circuit 33 pour se diriger vers la chambre 7.

La totalité du fluide déplacé ne pouvant être reçue dans la chambre 7, l'excédent de fluide emprunte l'orifice d'étranglement 13b que le tiroir 24 a ouvert en se déplaçant sous l'action du tiroir 26, et se dirige dans le réservoir 10 en circulant dans le premier circuit 31, la circulation de l'excédent de fluide étant symbolisée par la ligne en pointillés sur la figure 7.

On notera ici que la force de freinage de l'amortisseur croît avec le débit du fluide sous pression dans les orifices d'étranglement 13b, 14 (c'est-à-dire avec la vitesse de déplacement du piston 5) et qu'à une valeur déterminée de la pression de l'air comprimé de la suspension pneumatique correspond une position d'équilibre du tiroir 24 (cas de la traction) ou du tiroir 26 (cas de la compression) pour chacune des valeurs de ladite vitesse.

On notera également que la force de freinage de l'amortisseur est beaucoup plus importante en traction qu'en compression et que c'est pour tenir compte de cette caractéristique que les sections du tiroir 26 et de l'orifice d'étranglement 14b du second circuit 33 sont respectivement supérieures aux sections du tiroir 24 et de l'orifice d'étranglement 13b du premier circuit 31.

On précisera encore que l'on peut modifier l'allure des courbes d'amortissement de l'amortisseur en modifiant la forme des orifices d'étranglement 13b, 14b, la valeur du bras de levier formé par la ligne passant par le centre des axes 41, 43 avec le centre de l'axe 44, la distance séparant les axes 41, 43 ou celle séparant les axes 43, 44.

L'amortisseur que l'on peut voir sur la figure 8 diffère qui a été décrit ci-dessus par le fait que la tringlerie 34 a été remplacée par une membrane 52 et que le tiroir 24 l'a été par un tiroir 24a légèrement plus long, pourvu d'un renflement à son extrémité opposée au tiroir 26.

Le tiroir 24a s'avance dans un orifice 53 ménagé au centre d'une paroi circulaire 54 venue de matière avec le bloc 2 tandis que la membrane 52 est fixée par des boulons, au niveau de sa périphérie, entre la paroi 54 et un capot 55 délimitant avec elle une chambre 56 reliée, au droit d'un orifice 57, au soufflet ou au diaphragme (non représenté) de la suspension pneumatique du poids lourd.

Sous la pression de l'air comprimé de la suspension, la membrane 52 est appliquée contre le renflement du tiroir 24a et contre la paroi 54 lorsque l'amortisseur est au repos. En revanche, lorsque celui-ci travaille en traction ou en compression, le tiroir 24a contraint la membrane 52 à s'éloigner d'autant plus de la paroi que sa course est plus grande. A titre d'exemple, on a représenté sur la figure 8, la membrane en trait continu dans une position dans laquelle le tiroir 24a ne l'a pas repoussée et en traits interrompus dans quatre positions différentes dans lesquelles le tiroir 24a lui a fait prendre quatre déformations différentes.

Dans le mode de réalisation envisagé ici, la paroi 54 se présente sous la forme d'une calotte sphérique. Comme sa forme conditionne la résistance à l'enfoncement de la membrane et intervient sur la courbe d'amortissement de l'amortisseur, elle pourrait donc avoir un profil concave différent en vue d'obtenir une courbe d'amortissement particulière.

On notera par ailleurs que la paroi 54 comporte une gorge 58 à proximité de la périphérie de la membrane, ce qui permet au diamètre de décollement D de cette dernière d'atteindre plus rapidement sa valeur maximum Dm. (Sur la figure 8, le diamètre D représenté est le diamètre de décollement correspondant à la plus faible déformation représentée de la membrane).

Il est bien entendu indispensable que la membrane 52 ne puisse pas s'allonger sous la pression de l'air comprimé de la suspension et/ou sous l'action du piston 24a. Pour satisfaire cette exigence, elle est de préférence réalisée en une matière caoutchouteuse fortement armée de fils d'acier ou de fibres de verre.

On notera encore que la partie du tiroir 24a qui porte le renflement est logée dans une chambre 59 communiquant avec l'extérieur par un orifice 60 réalisé dans le bloc 2, cette chambre permettant la mise à l'air libre de la face de la membrane qui est à l'extérieur de la chambre 56.

Pour être complet, on précisera que le capot 55 peut avantageusement limiter le débattement de la membrane et donc du tiroir 24a.

Le fonctionnement de l'amortisseur selon le second mode de réalisation est évident et l'on s'abstiendra donc de le décrire ici.

## Revendications

1. Amortisseur pour véhicule à suspensions pneumatiques, notamment pour poids lourd, du type comprenant un cylindre (1), une tige (4) déplaçable axialement dans le cylindre, un piston (5) porté par la tige et divisant le cylindre en une chambre cylindrique (6) et une chambre annulaire (7), un fluide sous pression remplissant les chambres cylindrique et annulaire, un premier circuit (31) pour permettre au fluide de circuler de la chambre annulaire à la chambre cylindrique lorsque l'amortisseur travaille en traction, un second circuit (33) pour permettre au fluide de circuler de la chambre cylindrique à la chambre annulaire lorsque l'amortisseur travaille en compression, un réservoir de fluide sous pression (10) susceptible d'être relie aux chambres cylindrique et annulaire, et des premier et second régulateurs d'ecoulement (24, 26) montés dans les premier et second circuits pour y contrôler la circulation du fluide sous pression, ces régulateurs d'écoulement étant commandés par le fluide sous pression, à l'encontre ce l'action de la pression de l'air comprimé de la suspension pneumatique correspondante du vehicule, caractérisé en ce que les premier et second régulateurs d'écoulement comprennent respectivement un premier et un second tiroirs coaxiaux (24,26) déplaçables en translation et l'un par rapport à l'autre dans des première et seconde douilles coaxiales (13,14), entre une première position dans laquelle ils interdisent pratiquement toute circulation de fluide dans les premier et second circuits (31,33) lorsque l'amortisseur est au repos, une seconde position dans laquelle ils permettent une circulation de fluide dans le premier circuit (31) lorsque l'amortisseur travaille en traction, et une troisième position dans laquelle ils permettent une circulation de fluide dans le second circuit (33) lorsque l'amortisseur travaille en compression, les tiroirs (24,26) étant sollicités dans la première position par la pression de l'air comprimé tandis que la pression exercée sur le fluide sous pression pendant la traction et la compression de l'amortisseur agit à l'encontre de la pression de l'air comprimé pour déplacer les tiroirs (24,26) dans les seconde et troisième positions, respectivement; en ce que le second tiroir (26) comporte deux prolongements opposés (27,28) faisant saillie coaxialement sur ses deux faces, l'un (28) des prolongements étant tourné vers une face du premier tiroir (24) et ménageant avec ledit premier tiroir (24), lorsqu'il est en contact avec lui, une première chambre annulaire (30) tandis que l'autre prolongement (27) est tourné vers une butée d'arrêt (29) située à l'extrémité de la seconde douille (14) qui est opposée à la première douille (13) et ménage avec la butée d'arrêt (29); lorsqu'il est en contact avec elle une seconde chambre annulaire (32), la pression de l'air comprimé agissant sur l'autre face du premier tiroir (24) pour solliciter les premier et second tiroirs (24,26) vers la première position lorsque les prolongements (27,28) du second tiroir (26) sont respectivement en contact avec la butée d'arrêt (29) et le premier tiroir (24); et en ce que le premier circuit (31) communique avec la première chambre annulaire (30) ménagée entre les tiroirs (24,26) de sorte que la pression exercée sur le fluide sous pression lorsque l'amortisseur travaille en traction maintient l'autre prolongement (27) du second tiroir (26) contre la butée d'arrêt (29) et tend à éloigner le premier tiroir (24) du second tiroir (26) à l'encontre de l'action de la pression de l'air comprimé afin d'amener lesdits tiroirs dans la seconde position, tandis que le second circuit (33) communique avec la seconde chambre annulaire (32) ménagée entre le second tiroir (26) et la butée d'arrêt (29) de sorte que la pression exercée sur le fluide sous pression lorsque l'amortisseur travaille en compression tend à éloigner les deux tiroirs (24,26) de la butée d'arrêt (29) à l'encontre de l'action de la pression de l'air comprimé afin d'amener lesdits tiroirs dans la troisième position.

2. Amortisseur selon la revendication 1, caractérisé en ce que les premier et second circuit (31, 33) comportent chacun un orifice d'étranglememt (13b, 14b) dont l'ouverture est commandee par le tiroir correspondant (24, 26).

3. Amortisseur selon la revendication 2, caractérisé en ce que les orifices d'étranglement (13b, 14b) des premier et second circuits (31, 33) sont des orifices en paroi mince.

4. Amortisseur selon la revendication 2 ou 3, caractérisé en ce que les sections du tiroir (26) et de l'orifice d'étranglement (14b) du second circuit (33) sont respectivement supérieures aux sections du tiroir (24) et de l'orifice d'étranglement (13b) du premier circuit (31).

5. Amortisseur selon l'une quelconque des revendications 2 à 4, caractérisé en ce que l'orifice d'étranglement (14b) du second circuit (33) n'est pas complètement obturé lorsque l'amortisseur est au repos.

6. Amortisseur selon l'une quelconque des revendications 1 à 5, caractérisé en ce que le premier tiroir (24) est sollicité en direction du second tiroir (26) par une tringlerie (34) sur laquelle s'exerce la pression de l'air comprimé de la suspension pneumatique correspondante du véhicule.

7. Amortisseur selon la revendication 6, caractérisé en ce que la tringlerie (34) comprend un piston (38) solidaire d'une tige (39) déplaçable axialement dans un cylindre (36), une bielle (40) articulée à l'extrémité libre de la tige (39), et un levier (42) articulé sur la bielle (40), ce levier étant monté pivotant autour d'un axe fixe (44) et portant une came (45) s'appuyant contre le premier tiroir (24), la pression de l'air comprimé exerçant son action sur la face du piston (38) qui est tournée vers la tige (39).

8. Amortisseur selon la revendication 7, caractérisé en ce que le réservoir (10) et la chambre (48) du cylindre (36) sont reliés entre eux de manière à mettre sous pression le fluide contenu dans le réservoir (10).

9. Amortisseur selon l'une quelconque des revendications 1 à 5, caractérisé en ce que le premier tiroir (24a) est sollicité en direction du second tiroir (26) par une membrane (52) contre laquelle s'exerce la pression de l'air comprimé de la suspension pneumatique correspondante du véhicule.

10. Amortisseur selon la revendication 9, caractérisé en ce que le premier tiroir (24a) s'avance dans un orifice (53) ménagé au centre d'une paroi (54) contre laquelle s'appuie la membrane (52) et est apte à faire saillie hors de cet orifice pour éloigner la membrane (52) de la paroi (54) lorsque l'amortisseur travaille en traction ou en compression.

11. Amortisseur selon la revendication 10, caractérisé en ce que la membrane (52) est fixée par sa périphérie entre la paroi (54) et un capot (55) délimitant avec elle une chambre (56) dans laquelle s'exerce la pression de l'air comprimé de la suspension pneumatique.

12. Amortisseur selon la revendication, 10 ou 11, caractérisé en ce que la paroi (54) est concave et comporte une gorge (58) à proximité de la périphérie de la membrane (52).

13. Amortisseur selon la revendication 12, caractérisé en ce que la paroi (54) a la forme d'une calotte sphérique.

14. Amortisseur selon l'une quelconque des revendications 9 à 13, caractérisé en ce que la membrane (52) est armée pour ne pas s'allonger sous la pression de l'air comprimé de la suspension pneumatique et/ou sous l'action du piston (24a) du premier circuit (31).

**Claims**

1. A shock absorber for a vehicle with pneumatic suspensions, particularly for use with a heavy vehicle, of the type comprising a cylinder (1), a rod (4) movable axially in the cylinder, a piston (5) carried by the rod and dividing the cylinder into a cylindrical chamber (6) and an annular chamber (7), a pressurized fluid filling the cylindrical and annular chambers, a first circuit (31) for allowing the fluid to circulate from the annular chamber to the cylindrical chamber when the shock absorber is working under extension, a second circuit (33) for allowing the fluid to circulate from the cylindrical chamber to the annular chamber when the shock absorber is working under compression, a pressurized fluid reservoir (10) connectable to the cylindrical and annular chambers, and first and second flow regulators (24, 26) mounted in the first and second circuits for controlling the flow of the pressurized fluid therein, said flow regulators being controlled by the pressurized fluid, against the action of the pressure of the compressed air of the respective pneumatic suspension of the vehicle, characterized in that said first and second flow regulators comprise respectively first and second coaxial slide valves (24, 26) slidable in translation and relative to each other in first and second coaxial sockets (13, 14), between a first position where they practically prevent any flow of fluid in the first and second circuits (31, 33) when the shock absorber is at rest, a second position where they permit fluid to flow in the first circuit (31) when the shock absorber is working under extension, and a third position where they allow fluid to flow in the second circuit (33) when the shock absorber is working under compression, the slide valves (24, 26) being urged into the first position by the pressure of the compressed air and the pressure generated in the pressurized fluid during extension and compression of the shock absorber working against the pressure of the compressed air to move the slide valves (24, 26) to the second and third positions, respectively; in that the second slide valve (26) comprises two opposite extensions (27, 28) projecting coaxially from both sides thereof, one (28) of which is turned towards one side of the first slide valve (24) and creates a first annular chamber (30) with said first slide valve (24) when it is in contact therewith, and the other extension (27) being turned towards a stop (29) located at the end of the second socket (14) opposite from the first socket (13) and creating a second annular chamber (32) with the stop (29) when it is in contact therewith, the pressure of the compressed air acting on the other side of the first slide valve (24) to bias the first and second slide valves (24, 26) towards the first position when the extensions (27, 28) of the second slide valve (26) are in contact with the stop (29) and the first slide valve (24), respectively; and in that the first circuit (31) communicates with the first annular chamber (30) between the slide valves (24, 26), whereby the pressure generated in the pressurized fluid when the shock absorber is working under extension keeps the other extension (27) of the second slide valve (26) against the stop (29) and tends to move the first slide valve (24) away from the second slide valve (26) against the action of the pressure of the compressed air to place said slide valves in the second position, whereas the second circuit (33) communicates with the second annular chamber (32) between the second slide valve (26) and the stop (29), whereby the pressure generated in the pressurized fluid when the shock absorber is working under compression, tends to move the two slide valves (24, 26) away from the stop (29) against le action of the pressure of the compressed air to place said slide valves in the third position.

2. The shock absorber according to claim 1, characterized in that the first and second circuits (31, 33) each have a restriction orifice (13b, 14b) whose opening is controlled by the corresponding slide valve (24, 26).

3. The shock absorber according to claim 2, characterized in that the restriction orifices (13b, 14b) of the first and second circuits (31, 33) are thin wall orifices.

4. The shock absorber according to claim 2 or 3, characterized in that the sections of the slide valve (26) and of the restriction orifice (14b) of the second circuit (33) are respectively greater than the sections of the slide valve (24) and of the restriction orifice (13b) of the first circuit (31).

5. The shock absorber according to any of claims 2 to 4, characterized in that the restriction orifice (14b) of the second circuit (33) is not completely closed when the shock absorber is at rest.

6. The shock absorber according to any of claims 1 to 5, characterized in that the first slide valve (24) is urged in the direction of the second slide valve (26) through a linkage (34) on which is exerted the pressure of the compressed air of the corresponding pneumatic suspension of the vehicle.

7. The shock absorber according to claim 6, characterized in that the linkage (34) includes a piston (38) integral with a rod (39) movable axially in a cylinder (36), a link (40) articulated to the free end of the rod (39), and a lever (42) articulated to the link (40), said lever being mounted pivotally around a fixed pin (44) and carrying a cam (45) bearing against the first slide valve (24), the pressure of the compressed air exerting its action on the side of the piston (38) turned towards the rod (39).

8. The shock absorber according to claim 7, characterized in that the reservoir (10) and the chamber (48) of the cylinder (36) are connected together so as to pressurize the fluid in the reservoir (10).

9. The shock absorber according to any of claims 1 to 5, characterized in that the first slide valve (24a) is urged in the direction of the second slide valve (26) by a membrane (52) against which is exerted the pressure of the compressed air of the corresponding pneumatic suspension of the vehicle.

10. The shock absorber according to claim 9, characterized in that the first slide valve (24a) extends into an orifice (53) at the center of a wall (54) against which the membrane (52) is resting, and can project out of said orifice to move the membrane (52) away from the wall (54) when the shock absorber is working under extension or under compression.

11. The shock absorber according to claim 10, characterized in that the membrane (52) is fixed at its periphery between the wall (54) and a cover defining therewith a chamber (56) in which the pressure of the compressed air of the pneumatic suspension is exerted.

12. The shock absorber according to claim 10 or 11, characterized in that the wall (54) is concave and is formed with a groove (58) in the vicinity of the periphery of the membrane (52).

13. The shock absorber according to claim 12, characterized in that the wall (54) is in the form of a spherical cap.

14. The shock absorber according to any of claims 9 to 13, characterized in that the membrane (52) is reinforced so as not to expand under the pressure of the compressed air of the pneumatic suspension and/or under the action of the piston (24a) of the first circuit (31).

**Patentansprüche**

1. Stoßdämpfer für Fahrzeug mit Luftfederung, speziell für Lastkraftwagen, bestehend aus einem Zylinder (1), einer Kolbenstange (4), die sich axial im Zylinder bewegen kann, einem Kolben (5), der von der Kolbenstange getragen wird und den Zylinder in eine zylindrische Kammer (6) und eine ringförmige Kammer (7) trennt, einem unter Druck stehenden Fluid, das die zylindrischen und ringförmigen Kammern füllt, einem ersten Kreislauf (31), um dem Fluid zu ermöglichen, wenn der Stoßdämpfer auf Zug arbeitet, von der ringförmigen in die zylindrische Kammer zu fließen, einem zweiten Kreislauf (33), um dem Fluid zu ermöglichen, wenn der Stoßdämpfer auf Druck arbeitet, von der zylindrischen in die ringförmige Kammer zu fließen, einem unter Druck stehenden Fluidbehälter (10), geeignet, um mit den ringförmigen und zylindrischen Kammern verbunden zu werden, und aus ersten und zweiten Durchflußreglern (24,26), die in den ersten und zweiten Kreisläufen eingebaut sind, um dort den Umlauf des unter Druck stehenden Fluides zu regeln, wobei diese Durchflußregler durch das unter Druck stehende Fluid, entgegen der Wirkung des Druckes der komprimierten Luft der entsprechenden Luftfederung des Fahrzeuges gesteuert werden, wobei die ersten und zweiten Durchflußregler je einen ersten und einen zweiten Schieber beinhalten, die in den koaxialen ersten und zweiten Buchsen (13,14) verschiebbar und zueinander beweglich sind, zwischen einer ersten Lage, in welcher sie, wenn der Stoßdämpfer ruht, praktisch jeden Fluidumlauf in den ersten und zweiten Kreisläufen (31,33) unterbinden, einer zweiten Lage, in welcher, wenn der Stoßdämpfer auf Zug arbeitet, sie den Fluidumlauf im ersten Kreislauf (31) ermöglichen, und einer dritten Lage, in welcher, wenn der Stoßdämpfer auf Druck arbeitet, sie den Fluidumlauf im zweiten Kreislauf (33) ermöglichen, wobei die Schieber (24,26) in der ersten Stellung durch den Druck der komprimierten Luft belastet werden, während der auf dem unter Druck stehenden Fluid wirkende Druck während der Druck- und Zugbeanspruchung des Stoßdämpfers gegen den Druck der komprimierten Luft wirkt, um die Schieber (24,26) jeweils in die zweite und dritte Lage zu bewegen, wobei der zweite Schieber (26) zwei gegenüberliegende Verlängerungen (27,28) beinhaltet, die auf beiden Seiten koaxial herausragen, und eine dieser Verlängerungen (28) zu einer Seite des ersten Schiebers (24) gerichtet ist und mit dem ersten Schieber (24), wenn sie mit ihm in Kontakt ist,

9

eine erste Ringkammer (30) bildet, während die andere Verlängerung (27) zu einem Anschlag (29) gerichtet ist, der sich am Ende der zweiten Buchse (14) befindet, die gegenüber der ersten Buchse (13) liegt und mit dem Anschlag (29), wenn sie mit ihm in Kontakt ist, eine zweite Ringkammer bildet, um die ersten und zweiten Schieber (24,26) zur ersten STellung zu belasten, wenn die Verlängerungen (27,28) des zweiten Schiebers (26) jeweils mit dem Anschlag (29) und mit dem ersten Schieber (24) in Kontakt sind und der erste Kreislauf (31) mit der ersten Ringkammer (30) kommuniziert, die zwischen den Schiebern (24,26) angeordnet ist, damit, während der Stoßdämpfer auf Zug arbeitet, der auf das unter Druck stehende Fluid wirkende Druck die andere Verlängerung (27) des zweiten Schiebers (26) gegen den Anschlag (29) hält, und versucht, den ersten Schieber (24) vom zweiten Schieber (26) entgegen dem Wirken des Druckes der komprimierten Luft zu entfernen, um die Schieber in die zweite Lage zu bringen, während der zweite Kreislauf (33) mit der zweiten zwischen dem zweiten Schieber (26) und dem Anschlag (29) vorgesehenen Ringkammer (32) kommuniziert, damit der Druck, der, während der Stoßdämpfer auf Zug arbeitet, auf das unter Druck stehende Fluid wirkt, die andere Verlängerung (27) des zweiten Schiebers (26) gegen den Anschlag (29) drückt und versucht, den ersten Schieber (24) vom zweiten Schieber (26) gegen der Wirkung des Druckes der komprimierten Luft wegzudrücken, um die besagten Schieber in die zweite Stellung zu bringen, während der zweite Kreislauf (33) mit der zwischen dem zweiten Schieber (26) und dem Anschlag (29) vorgesehenen Ringkammer (32) kommuniziert, damit der auf dem unter Druck stehenden Fluid wirkende Druck versucht, wenn der Stoßdämpfer auf Druck arbeitet, die zwei Schieber (24,26) von dem Anschlag (29) gegen dem Wirken des Druckes der komprimierten Luft zu entfernen, um die besagten Schieber in die dritte Stellung zu bringen.

2. Stoßdämpfer nach Anspruch 1, **dadurch gekennzeichnet,** daß die ersten und zweiten Kreisläufe (31,33) jeweils eine Drosselbohrung (13,14b) beinhalten, deren Öffnung durch den entsprechenden Schieber (24,26) gesteuert wird.

3. Stoßdämpfer nach Anspruch 2, **dadurch gekennzeichnet,** daß die Drosselbohrungen (13b,14b) der ersten und zweiten Kreisläufe (31,33) klein kalibriert sind.

4. Stoßdämpfer nach Anspruch 2 oder 3, **dadurch gekennzeichnet,** daß die Querschnitte des Schiebers (26) und der Drosselbohrung (14b) des zweiten Kreislaufes (33) jeweils größer sind als die Querschnitte des Schiebers (24) und der Drosselbohrung (13b) des ersten Kreislaufes (31).

5. Stoßdämpfer nach einem der Ansprüche 2 bis 4, **dadurch gekennzeichnet,** daß die Drosselbohrung (14b) des zweiten Kreislaufes (33) nicht ganz gesperrt ist, wenn der Stoßdämpfer in Ruhestellung ist.

6. Stoßdämpfer nach einem der Ansprüche 1 bis 5, **dadurch gekennzeichnet,** daß der erste Schieber (24) durch ein Gestänge (34) in Richtung des zweiten Schiebers (26) beansprucht wird, auf welchem der Druck der komprimierten Luft der entsprechenden Luftfederung des Fahrzeuges wirkt.

7. Stoßdämpfer nach Anspruch 6, **dadurch gekennzeichnet,** daß das Gestänge (34) aus einem Kolben (38) besteht, der fest an einer Stange (39) montiert ist, die in einem Zylinder (36) koaxial beweglich ist, einer am freien Ende der Stange (39) angelenkten Zwischenstange (40) und aus einem an der Zwischenstange (40) angelenkten Nebel (42), wobei dieser Hebel schwenkbar um eine fixe Achse (44) montiert ist und einen Nocken (45) trägt, der sich gegen den ersten Schieber (24) stützt, wobei der Druck der komprimierten Luft auf der Seite des Kolbens (38) wirkt, die zur Stange (39) gewendet ist.

8. Stoßdämpfer nach Anspruch 7, **dadurch gekennzeichnet,** daß der Behälter (10) und die Kammer (48) des Zylinders (36) miteinander verbunden sind, um das im Behälter (10) befindliche Fluid unter Druck zu setzen.

9. Stoßdämpfer nach einem der Ansprüche 1 bis 5, **dadurch gekennzeichnet,** daß der erste Schieber (24a) in Richtung des zweiten Schiebers (26) durch eine Membrane (52) beansprucht wird, gegen welche der Druck der komprimierten Luft der entsprechenden Luftfederung des Fahrzeuges einwirkt.

10. Stoßdämpfer nach Anspruch 9, **dadurch gekennzeichnet,** daß der erste Schieber (24a) sich in einer Bohrung (53) bewegt, die in der Mitte einer Wandung (54) angebracht ist, gegen welche die Membrane (52) drückt, und in der Lage ist, aus dieser Bohrung hinauszuragen, um die Membrane (52), wenn der Stoßdämpfer auf Zug oder Druck arbeitet, von der Wandung (54) zu entfernen.

11. Stoßdämpfer nach Anspruch 10, **dadurch gekennzeichnet,** daß die Membrane (52) an ihrem Umfang zwischen der Wandung (54) und dem Deckel (55) befestigt ist, wobei sie mit ihm eine Kammer (56) bildet, in welcher der Druck der komprimierten Luft der Luftfederung sich auswirkt. ˙

12. Stoßdämpfer nach Anspruch 10 oder 11, **dadurch gekennzeichnet,** daß die Wandung (54) konkav ist und in der Nähe des Umfanges der Membrane (52) eine Rillle (58) beinhaltet.

13. Stoßdämpfer nach Anspruch 12, **dadurch gekennzeichnet,** daß die Wandung (54) die Form einer sphärischen Haube hat.

14. Stoßdämpfer nach einem der Ansprüche 9 bis 13, **dadurch gekennzeichnet,** daß die Membrane (52) verstärkt ist, um sich unter dem Druck der komprimierten Luft der Luftfederung und/oder unter der Einwirkung des Kolbens (24a) des ersten Kreislaufes (31) nicht auszudehnen.

FIG.1

## FIG.2

## FIG.3

## FIG.4

## FIG.5

## FIG.6

## FIG.7

# FIG. 8